# EUROPÄISCHE PATENTSCHRIFT

(11) **EP 2 561 519 B1**
(45) Veröffentlichungstag und Bekanntmachung des Hinweises auf die Patenterteilung: **12.04.2017**
(21) Anmeldenummer: 11721421.3
(22) Anmeldetag: 15.04.2011
(51) Int. Cl.: H01C 1/02, H02H 9/04, H01C 7/12

(54) **ÜBERSPANNUNGSSCHUTZELEMENT**
OVERVOLATGE PROTECTION ELEMENT
ÉLÉMENT DE PROTECTION CONTRE LES SURTENSIONS

(30) Priorität: 20.04.2010 DE 102010015814
(43) Veröffentlichungstag der Anmeldung: 27.02.2013
(73) Patentinhaber: Phoenix Contact GmbH & Co. KG, 32825 Blomberg (DE)
(72) Erfinder: DEPPING, Christian, 32657 Lemgo (DE); GREWE, Christina, 32760 Detmold (DE); WOSGIEN, Joachim, 32584 Löhne (DE); JUNGERMANN, Philip, 32825 Blomberg (DE)
(74) Vertreter: Gesthuysen Patent- und Rechtsanwälte
(86) Internationale Anmeldenummer: PCT/EP2011/001916
(87) Internationale Veröffentlichungsnummer: WO 2011/141115

(56) Entgegenhaltungen:
- EP-A1- 0 016 850
- DE-A1-102007 030 653
- DE-A1-102008 013 447
- DE-T2- 60 112 410
- US-A- 5 721 664

## Beschreibung

Die Erfindung betrifft ein Überspannungsschutzelement mit einem Gehäuse, mit Anschlüssen zum elektrischen Anschluss des Überspannungsschutzelements an den zu schützenden Strom- oder Signalpfad, mit zwei im Inneren des Gehäuses angeordneten und elektrisch parallel geschalteten Varistoren und mit einer zumindest teilweise zwischen den Varistoren angeordneten Mittenelektrode, wobei das Gehäuse zwei aus Metall bestehende, elektrisch miteinander verbundene Gehäusehälften aufweist, wobei die Mittenelektrode gegenüber den Gehäusehälften isoliert ist und mit ihren einander gegenüberliegenden Seiten jeweils elektrisch mit einem ersten Anschlussbereich eines Varistors verbunden ist, und wobei die beiden Varistoren und die Mittenelektrode sandwichartig zwischen den beiden Gehäusehälften angeordnet sind.

Elektrische Stromkreise und Anlagen arbeiten mit der für sie spezifizierten Spannung, der Nennspannung, normalerweise störungsfrei. Das gilt dann nicht, wenn Überspannungen auftreten. Als Überspannungen gelten alle Spannungen, die oberhalb der oberen Toleranzgrenze der Nennspannung liegen. Hierzu zählen vor allem auch die transienten Überspannungen, die aufgrund von atmosphärischen Entladungen, aber auch durch Schalthandlungen oder Kurzschlüsse in Energieversorgungsnetzen auftreten können und galvanisch, induktiv oder kapazitiv in elektrische Stromkreise eingekoppelt werden können. Um nun elektrische oder elektronische Stromkreise, insbesondere elektronische Meß-, Steuer-, Regel- und Schaltkreise, wo auch immer sie eingesetzt sind, gegen transiente Überspannungen zu schützen, sind Überspannungsschutzelemente entwickelt worden und seit vielen Jahren bekannt.

Aufgrund von Alterung und zeitweise auftretenden Überspannungen (TOV) im Sekundenbereich kommt es insbesondere bei Überspannungsschutzelementen mit einem Varistor als Ableiter zu einer unerwünschten Erhöhung des Leckstromes des Varistors bei Betriebsspannungen. Überspannungsschutzelemente mit einem Varistor als Ableiter weisen daher heutzutage häufig eine thermische Abtrennvorrichtung auf, durch die ein nicht mehr einwandfrei funktionsfähiger Varistor elektrisch von dem zu überwachenden Strompfad abgetrennt wird. Bei bekannten Überspannungsschutzelementen erfolgt die Überwachung des Zustandes des Varistors nach dem Prinzip eines Temperaturschalters, wobei bei Überhitzung des Varistors - beispielsweise aufgrund aufgetretener Leckströme - eine zwischen dem Varistor und einem Trennmittel vorgesehene Lötverbindung aufgetrennt wird, was zu einem elektrischen Abtrennen des Varistors führt.

Ein derartiges Überspannungsschutzelement ist beispielsweise aus der DE 695 03 743 T2 bekannt. Bei dem bekannten Überspannungsschutzelement, das zwei parallel zueinander angeordnete Varistoren aufweist, ist die thermische Abtrennvorrichtung zusätzlich noch mit einer optischen Zustandsanzeige verbunden, so dass der Zustand des Überspannungsschutzelements direkt vor Ort anhand der optischen Zustandsanzeige abgelesen werden kann. Als optische Zustandsanzeige weist dieses Überspannungsschutzelement einen im Gehäuse angeordneten ersten Schieber auf, der von Trennzungen betätigt wird, die die Trennmittel bilden, und dabei mit einem zweiten Schieber zusammenwirkt, der in Abhängigkeit von der Position des ersten Schiebers relativ zu einem Sichtfenster verschiebbar ist.

Nachteilig ist bei den bekannten Überspannungsschutzgeräten bzw. den Überspannungsschutzelementen jedoch, daß jeder sich öffnende Kontakt unter Betriebsspannungen größer 30 Volt und hohen Strombelastungen einen Lichtbogen erzeugen kann. Somit kann es beim Auftrennen der Lötverbindung zu einem Lichtbogen zwischen dem Varistor und dem Trennmittel kommen, was zu einer Beschädigung von innerhalb des Überspannungsschutzelements angeordneten Bauteilen oder des Überspannungsschutzelements insgesamt, insbesondere des den Varistor umgebenden Kunststoffgehäuses führen kann. Da derartige Überspannungsschutzelemente bzw. Überspannungsschutzgeräte häufig zu mehreren benachbart zueinander und zu anderen elektronischen Geräten angeordnet sind, kann es aufgrund eines im Inneren des Gehäuses auftretenden Lichtbogens auch zur Zerstörung oder Beschädigung benachbarter Überspannungsschutzgeräte oder anderer elektronischer Geräte kommen.

Aus der DE 601 12 410 T2 ist ein Überspannungsschutzgerät bekannt, das eine in einem Metallgehäuse angeordnete Varistorscheibe (Wafer) aufweist, die mit Hilfe einer kolbenförmigen Elektrode gegen den Boden des topfförmigen Gehäuses verspannt ist. Das Gehäuse wird mit einem Deckel verschlossen, der entweder in das topfförmige Gehäuse eingeschraubt wird oder durch einen Federring bzw. einen Clip, der in einer Nut in der Seitenwand des Gehäuses einrastet, befestigt wird. Dabei ist im Deckel eine Öffnung vorgesehen, durch die der Schaft der Elektrode aus dem Gehäuse zum elektrischen Anschluss der Elektrode herausgeführt ist. Der zweite Anschluss zum elektrischen Anschluss des Überspannungsschutzgeräts an die zu schützenden Strom- oder Signalpfade ist dabei am Gehäuse ausgebildet. Zur elektrischen Isolierung der Elektrode gegenüber dem Gehäuse ist ein Isolationsring vorgesehen, der innerhalb des Gehäuses angeordnet ist und ebenfalls eine Öffnung für den Schaft der Elektrode aufweist. Gemäß einer anderen Ausführung weist das aus der DE 601 12 410 T2 bekannte Überspannungsschutzgerät zwei Varistorscheiben auf, die jeweils mit Hilfe einer kolbenförmigen Elektrode gegen eine Mittelwand des zylindrischen Gehäuses verspannt sind. Zum Anschluss des Gehäuses ist an dem Gehäuse eine Gehäuseelektrodenlasche ausgebildet. Durch die Ausbildung des Gehäuses aus Aluminium wird zwar eine Zerstörung des Gehäuses bei einem am Varistor auftretenden Lichtbogen verhindert, die elektrische Kontaktierung des Varistors sowie dessen Anordnung im Gehäuse und die Anordnung und Ausgestaltung der Elektroden machen den Aufbau und die Montage des bekannten Überspannungsschutzgeräts jedoch relativ aufwendig.

Aus der DE 10 2007 030 653 A1 ist ein eingangs beschriebenes Überspannungsschutzelement bekannt, welches ebenfalls ein aus zwei Gehäusehalbschalen bestehendes Metallgehäuse aufweist. Sowohl bei dem aus der DE 10 2007 030 653 A1 als auch bei dem aus der DE 601 12 410 T2 bekannten Überspannungsschutzelement besteht ein Problem darin, dass die innerhalb des Gehäuses angeordneten Varistorscheiben insbesondere in ihrer Dicke toleranzbehaftet sind, so dass zur Gewährleistung einer sicheren Kontaktierung der Anschlussbereiche der Varistoren bei beiden Überspannungsschutzelementen Federelemente im Gehäuse eingesetzt werden.

Bei dem aus der DE 10 2007 030 653 A1 bekannten Überspannungsschutzelement sind dabei gemäß der bevorzugten Ausführungsform zwei federnde Kontaktelemente jeweils zwischen einer Gehäusehalbschale und dem zugeordneten ersten Anschlussbereich eines Varistors angeordnet. Die elektrische Verbindung zwischen den beiden Gehäusehalbschalen und den beiden Varistoren kann dadurch zwar durch eine rein mechanische Verbindung realisiert werden, so dass Schweiß- oder Lötvorgänge bei der Montage des Überspannungsschutzelements nicht erforderlich sind, in Abhängigkeit von der jeweils tatsächlichen Dicke der beiden Varistoren kommt es jedoch zu unterschiedlichen Kontaktkräften, wodurch die zuverlässige und dauerhafte Funktion des Überspannungsschutzelements unter Umständen beeinträchtigt werden kann. Darüber hinaus hat die Verwendung der federnden Kontaktelemente den Nachteil, dass durch die Impedanz der federnden Kontaktelemente die Impedanz der elektrischen Verbindung mit den Varistoren vergrößert und damit auch der mögliche Schutzpegel erhöht wird. Außerdem wird die Kontaktierungsfläche der Varistoren mit den Gehäusehalbschalen verringert wird, was die Impedanz der elektrischen Verbindung weiter erhöht.

DE 10 2008 013 447 A1 beschreibt einen Überspannungsableiter, bei dem innerhalb eines Gehäuses ein temperaturabhängiger Kurzschlussschalter derart angeordnet ist, dass bei Erreichen einer vorgegebenen Grenztemperatur aufgrund einer übermäßigen Erwärmung des Varistors der Varistor kurzgeschlossen wird.

Der vorliegenden Erfindung liegt daher die Aufgabe zugrunde, ein eingangs beschriebenes Überspannungsschutzelement so weiterzubilden, dass mit ihm ein möglichst niedriger Schutzpegel erreichbar ist. Darüber hinaus soll das Überspannungsschutzelement vorzugsweise besonders robust und langlebig ausgebildet sowie möglichst einfach und kostengünstig aufgebaut und montierbar sein.

Die Erfindung ist durch die Merkmale des unabhängigen Anspruchs 1 und, alternativ, durch die Merkmale des unabhängigen Anspruchs 4 definiert.

Erfindungsgemäß ist mindestens ein temperaturabhängiger Kurzschlussschalter derart innerhalb des Gehäuses angeordnet, dass bei Erreichen einer vorgegebenen Grenztemperatur T₁ aufgrund einer übermäßigen Erwärmung mindestens eines Varistors zumindest dieser Varistor kurzgeschlossen wird. Grundsätzlich besteht dabei die Möglichkeit, dass bei Erreichen einer vorgegebenen Grenztemperatur aufgrund einer übermäßigen Erwärmung eines Varistors entweder beide Varistoren gemeinsam oder nur der erwärmte Varistor und somit beide Varistoren unabhängig voneinander kurzgeschlossen werden.

Wie eingangs bereits ausgeführt worden ist, tritt bei Varistoren aufgrund von Alterung und häufiger Impulsbelastung an ihrem Lebensende eine Reduzierung der Isolationseigenschaften auf, wodurch Verlustleistung im Varistor umgesetzt wird, was zu einer Erwärmung des Varistors führt. Die Temperatur eines Varistors kann dabei so stark ansteigen, dass eine Brandgefahr entsteht. Um eine derart starke Erwärmung der Varistoren zu verhindern, ist gemäß der weiteren Lehre der Erfindung mindestens ein temperaturabhängiger Kurzschlussschalter vorgesehen, wobei durch den oder die Kurzschlussschalter jedoch nur der Varistor bzw. die Varistoren kurzgeschlossen und nicht - wie im Stand der Technik üblich - elektrisch von dem zu überwachenden Strompfad abgetrennt werden.

Erfindungsgemäß sind die beiden Gehäusehälften jeweils elektrisch mit dem zweiten Anschlussbereich eines Varistors verbunden. Die beiden parallel geschalteten Varistoren werden somit einerseits von der zwischen ihnen angeordneten Mittenelektrode und andererseits von den beiden Gehäusehälften kontaktiert, wobei das Gehäuse mit Bezugspotential verbindbar und die Mittelelektrode direkt oder indirekt mit dem ersten Anschluss des Über-spannungsschutzelements zum Anschluss mindestens eines aktiven Leiters des zu schützenden Strom- oder Signalpfads verbunden ist.

Erfindungsgemäß ein temperaturabhängiger Kurzschlussschalter vorgesehen, der einen Kurzschlussbügel, ein mit dem Kurzschlussbügel mechanisch verbundenes isolierendes Halteelement, mindestens ein Federelement und ein Haltemetall aufweist. Im Normalzustand der Varistoren, d.h. wenn die Varistoren nicht überhitzt sind, ist der Kurzschlussbügel beabstandet von der Mittenelektrode angeordnet, obwohl am Halteelement eine Federkraft des Federelements in Richtung auf die Mittenelektrode angreift. Das Halteelement wird dabei dadurch in dieser (ersten) Position gehalten, dass sich das Halteelement mit einem durch eine Öffnung in der Mittenelektrode ragenden Abstandselement am Haltemetall abstützt, welches über eine Lötverbindung mit der Mittenelektrode verbunden ist.

Kommt es zu einer Erwärmung der Varistoren, so führt dies auch zu einer Erwärmung der Mittenelektrode, was bei einer vorgegebenen Temperatur von beispielsweise 140° zu einem Schmelzen bzw. Auftrennen der Lötverbindung führt, so dass der Kurzschlussbügel bzw. das Halteelement nicht mehr von dem Haltemetall in der ersten Position gehalten wird. Durch die Federkraft des Federelements wird das Halteelement - und damit auch der Kurzschlussbügel - dann in eine zweite Position verbracht, in der der Kurzschlussbügel sowohl die Mittenelektrode als auch das Gehäuse kontaktiert, so dass die Varistoren über den Kurzschlussbügel kurzgeschlossen werden.

Gemäß einer bevorzugten Ausgestaltung ist dabei der Kurzschlussbügel im Wesentlichen U-förmig ausgebildet, so dass der Kurzschlussbügel einen U-Rücken und zwei U-Schenkel aufweist. Im Kurzschlussfall kontaktiert dann der U-Rücken die Mittenelektrode und die beiden U-Schenkel das Gehäuse. Hierzu sind am Gehäuse entsprechende Kontaktabschnitte ausgebildet, die im Kurzschlussfall von den U-Schenkeln kontaktiert werden.

Gemäß einer Alternative des erfindungsgemäßen Überspannungsschutzelements ist die Mittenelektrode mit dem ersten Anschluss zum Anschluss mindestens eines aktiven Leiters des zu schützenden Strom- oder Signalpfads verbunden und zwischen den beiden Gehäusehälften und den zugewandten zweiten Anschlussbereichen der beiden Varistoren jeweils ein Verbindungsmetall angeordnet, wobei die Verbindungsmetalle jeweils durch ein Isolierelement von den Gehäusehälften isoliert sind. Bei dieser Ausführungsform werden die beiden parallel geschalteten Varistoren somit einerseits von der zwischen ihnen angeordneten Mittenelektrode und andererseits jeweils von einem Verbindungsmetall kontaktiert, wobei die Verbindungsmetalle direkt oder indirekt mit dem Gehäuse verbunden werden. Die beiden Varistoren sind jedoch nicht - wie bei der zuvor beschriebenen ersten Ausführungsform - direkt flächig mit den beiden Gehäusehälften, sondern vorzugsweise ebenfalls flächig, mit jeweils einem Verbindungsmetall verbunden.

Hierbei ist beiden Varistoren jeweils ein Kurzschlussschalter zugeordnet, wobei jeder Kurzschlussschalter einen flexiblen Leiterabschnitt, einen Betätigungsstift und ein Federelement aufweist. Das erste Ende des flexiblen Leiterabschnitts ist dabei elektrisch mit einem Kontaktabschnitt am zugeordneten Verbindungsmetall und das zweite Ende des flexiblen Leiterabschnitts mit einem Ende des zugehörigen Betätigungsstifts verbunden. Im Normalzustand des dem Kurzschlussschalter zugeordneten Varistors ist das zweite Ende des flexiblen Leiterabschnitts beabstandet von einem an der Mittenelektrode ausgebildeten Kontaktabschnitt angeordnet, wobei am Betätigungsstift die in Richtung des Kontaktabschnitts der Mittelelektrode wirkende Federkraft des Federelements angreift. Der Federkraft des Federelements wirkt im Normalzustand ein thermosensitives Element entgegen, durch das der Betätigungsstift entgegen der Federkraft des Federelements in seiner ersten Position gehalten wird.

Kommt es zu einer Erwärmung des Varistors, so führt dies bei einer vorgegebenen Temperatur zu einem Erweichen des thermosensitiven Elements, so dass das zweite Ende des flexiblen Leiterabschnitts durch die am Betätigungsstift angreifende Federkraft des Federelements in eine zweite Position verbracht wird, in der das zweite Ende des flexiblen Leiterabschnitts den Kontaktabschnitt der Mittenelektrode kontaktiert. Der Varistor ist dann über den flexiblen Leiterabschnitt kurzgeschlossen, da die mit dem ersten Anschlussbereich des Varistors verbundene Mittenelektrode über den flexiblen Leiterabschnitt mit dem Verbindungsmetall elektrisch leitend verbunden ist, das mit dem zweiten Anschlussbereich des Varistors verbunden ist.

Bei dieser Ausführungsvariante sind vorzugsweise die Betätigungsstifte jeweils in einem Loch im zugeordneten Kontaktabschnitt des Verbindungsmetalls geführt und die Federelemente jeweils zwischen dem ersten Ende der Betätigungsstifte und dem Kontaktabschnitt des Verbindungsmetalls angeordnet. Im Normalzustand der Varistoren sind dabei die Federelemente entgegen ihrer Federkraft zusammengedrückt, wobei die Betätigungsstifte dadurch in ihrer ersten Position gehalten werden, dass in den Betätigungsstiften jeweils ein thermosensitiver Stift angeordnet ist, der sich auf der dem Federelement gegenüberliegenden Seite des Kontaktabschnitts des Verbindungsmetalls befindet und an diesem anliegt. Kommt es zu einer Erwärmung eines Varistors, so führt dies auch zu einer Erwärmung des den Varistor kontaktierenden Verbindungsmetalls und somit auch des Kontaktabschnitts des Verbindungsmetalls. Dies führt dazu, dass der thermosensitive Stift sich ebenfalls erwärmt und dadurch ab einer vorgegebenen Temperatur seine Festigkeit verliert, so dass der Stift den Betätigungsstift nicht mehr entgegen der Federkraft des Federelements in der ersten Position halten kann.

Gemäß einer bevorzugten Variante dieser Ausführungsform ist den beiden Varistoren jeweils eine Vorsicherung, insbesondere eine Schmelzsicherung, zugeordnet, wobei ein Anschluss der Vorsicherungen jeweils mit dem zugeordneten Verbindungsmetall elektrisch leitend verbunden ist. Der zweite Anschluss der Vorsicherung ist direkt oder indirekt mit dem Gehäuse des Überspannungsschutzelements verbunden.

Durch die Integration der Vorsicherungen in das Gehäuse des Überspannungsschutzelements kann auf die Verwendung von zusätzlichen, separaten Vorsicherungen verzichtet werden. Darüber hinaus weist diese Ausführungsform den Vorteil auf, dass nur der überlastete Varistor kurzgeschlossen und nachfolgend - bei einem auftretenden Kurzschlussstrom - durch die Vorsicherung von dem zu überwachenden Strom- oder Signalpfad und damit von der Versorgungsspannung abgetrennt wird. Ist ein überlasteter Varistor von der Versorgungsspannung abgetrennt, so ist die Schutzfunktion des Überspannungsschutzelements zwar herabgesetzt, ein Grundschutz bleibt jedoch durch den weiterhin aktiven zweiten Varistor gewährleistet.

Als Vorsicherungen in der Regel verwendete Schmelzsicherungen sind entsprechend des charakteristischen Schmelzintegrals nur bedingt impulsstromfest. Dadurch, dass bei der zuvor beschriebenen Ausführungsform zwei Kurzschlussschalter und zwei Vorsicherungen vorgesehen sind, verteilt sich ein überspannungsabhängiger Impulsstrom auf die beiden Sicherungen, so dass die Sicherungsnennwerte kleiner bemessen werden können. Darüber hinaus stellen sich im Kurzschlussfall niedrigere Kurzschlussströme mit einer kürzeren Stromflusszeit ein, wodurch der durch den Kurzschlussstrom verursachte Spannungseinbruch reduziert wird. Dadurch werden Anlagensicherungen weniger gestresst, die Netzqualität verbessert und insgesamt die Anlagenverfügbarkeit erhöht.

Alternativ zur Verwendung einer Vorsicherung und eines thermischen Kurzschlussschalters kann auch (nur) eine Sicherung mit einem Schmelzleiter verwendet werden, die dann so angeordnet und ausgebildet ist, dass sie sowohl die Funktion der Vorsicherung als auch die Funktion des thermischen Kurzschlussschalters übernimmt. Die mit einem Varistor elektrisch leitend verbundene Sicherung ist dazu so ausgebildet, dass sie sowohl bei Erreichen einer vorgegebenen Grenztemperatur aufgrund einer übermäßigen Erwärmung des Varistors als auch beim Auftreten eines Kurschlusses auslöst und damit den zugeordneten Varistor elektrisch vom Stromkreis abtrennt.

Die Sicherung weist dazu vorzugsweise einen Schmelzleiter aus einem niedrig schmelzenden Material, beispielsweise Zinn, auf, so dass die Sicherung - im Unterschied zu herkömmlichen Sicherungen - nicht nur bei einem auftretenden Kurzschlussstrom sondern auch bei einer zu starken Erwärmung auslöst, indem der Schmelzleiter durch den Kurzschlussstrom oder die Erwärmung zerstört wird. Ein innerhalb der Sicherung auftretenden Schaltlichtbogen wird durch geeignete Löschhilfen, beispielsweise Sand, gelöscht.

Bei der Ausführungsform des Überspannungsschutzelements, bei dem die Mittenelektrode mit einem ersten Anschluss zum Anschluss mindestens eines aktiven Leiters des zu schützenden Strom- oder Signalpfads verbunden ist und bei der zwischen den beiden Gehäusehälften und den zugewandten zweiten Anschlussbereichen der beiden Varistoren jeweils ein Verbindungsmetall angeordnet ist, wobei die Verbindungsmetalle jeweils durch ein Isolationselement von den Gehäusehälften isoliert sind, ist der erste Anschluss des weiteren Ableiters mit dem Gehäuse und der zweite Anschluss des weiteren Ableiters mit den beiden Verbindungsmetallen direkt oder indirekt verbunden. Bei dieser Ausführungsform ist somit der erste Anschluss des Überspannungsschutzelements, der mit einem aktiven Leiter verbunden wird, mit der Mittenelektrode, die Mittenelektrode mit ihren einander gegenüberliegenden Seiten jeweils elektrisch mit dem ersten Anschlussbereich der beiden Varistoren, die beiden Varistoren jeweils mit ihrem zweiten Anschlussbereich mit den beiden Verbindungsmetallen, die beiden Verbindungsmetalle jeweils direkt oder indirekt mit dem zweiten Anschluss des weiteren Ableiters und der erste Anschluss des weiteren Ableiters mit dem Gehäuse des Überspannungsschutzelements verbunden, wobei auch hier das Gehäuse über einen zweiten Anschluss mit Bezugspotential verbindbar ist.

Zuvor ist ausgeführt worden, dass der zweite Anschluss des weiteren Ableiters mit den beiden Verbindungsmetallen direkt oder indirekt verbunden ist. Ist der zweite Anschluss des weiteren Ableiters direkt mit den beiden Verbindungsmetallen verbunden, so besteht zwischen dem zweiten Anschluss und den beiden Verbindungsmetallen dauerhaft eine elektrisch leitende Verbindung. Gemäß einer bevorzugten Ausgestaltung dieser Ausführungsform ist der zweite Anschluss des weiteren Ableiters jedoch dadurch (nur) indirekt mit den beiden Verbindungsmetallen verbunden, dass zwischen dem zweiten Anschluss des weiteren Ableiters und den beiden Verbindungsmetallen jeweils eine Vorsicherung, insbesondere eine Schmelzsicherung angeordnet ist. Die Verbindungsmetalle weisen jeweils einen Kontaktabschnitt auf, der mit dem ersten Anschluss der zugeordneten Vorsicherung elektrisch leitend verbunden ist, während die zweiten Anschlüsse der beiden Vorsicherungen mit dem zweiten Anschluss des weiteren Ableiters elektrisch leitend verbunden sind.

Zuvor ist bereits ausgeführt worden, dass das metallische Gehäuse über einen zweiten Anschluss mit Bezugspotential verbindbar ist. Konstruktiv kann der zweite Anschluss dabei gemäß einer Ausführungsform dadurch realisiert sein, dass das Gehäuse einen Befestigungsbereich aufweist, über den das Gehäuse mit einer Montageplatte als Bezugspotential verbindbar ist. Alternativ oder zusätzlich weist das Gehäuse, insbesondere die erste Gehäusehälfte, einen Schutzleiteranschluss als zweiten Anschluss auf, über den (zusätzlich) ein Schutzleiter mit dem Gehäuse elektrisch verbindbar ist.

Der erste Anschluss des Überspannungsschutzelements zum Anschluss mindestens eines aktiven Leiters des zu schützenden Strom- oder Signalpfads kann gemäß einer bevorzugten Ausführungsform von einer Hochstromdurchführungsklemme gebildet sein, die vorzugsweise an einer Stirnseite, insbesondere der Oberseite, der ersten Gehäusehälfte angeordnet ist. Durch die Verwendung einer Hochstromdurchführungsklemme ist eine berührgeschützte Installation der Anschlussleitung bzw. der Anschlussleitungen möglich, wobei das Potential isoliert und hochstromtragfähig in das Gehäuse geführt wird. Durch die Verwendung zusätzlicher Isolierformteile innerhalb des Gehäuses können die Luft- und Kriechstrecken in diesem Bereich weiter erhöht werden.

Alternativ zur Verwendung einer Hochstromdurchführungsklemme eine mit der Mittenelektrode vorzugsweise einstückig verbundene Anschlusselektrode durch eine isolierende Gehäusedurchführung in das Gehäuseinnere geführt werden.

Gemäß einer Ausgestaltung des erfindungsgemäßen Überspannungsschutzelements ist eine optische Anzeigeeinrichtung und vorzugsweise zusätzlich auch eine fernübertragbare Anzeigeeinrichtung zur Anzeige des Zustands der Varistoren am Gehäuse ausgebildet bzw. angeordnet. Vorzugsweise weist dabei die Anzeigeeinrichtung eine Leiterplatte auf, auf der sich mehrere LEDs befinden. Darüber hinaus weist die Anzeigeeinrichtung noch mehrere Temperatursicherungen auf, die in thermischem Kontakt mit der Mittenelektrode stehen. Erreicht die Temperatur der Mittenelektrode eine erste vorgegebene Grenztemperatur, so löst die erste Temperatursicherung aus, was dazu führt, dass eine den fehlerfreien Zustand anzeigende, vorzugsweise grüne LED erlischt. Gleichzeitig beginnt eine zweite, vorzugsweise rote LED zu leuchten, wodurch ein Fehlerfall angezeigt wird. Eine vorzugsweise vorgesehene zweite Temperatursicherung kann als fernübertragbare Funktionsanzeige über einen steckbaren Leiterplattenverbinder abfragbar sein. Darüber hinaus kann eine dritte Temperatursicherung vorgesehen sein, die in ihrer Auslösetemperatur auf das Schalten eines Kurzschlussschalters abgestimmt ist, so dass auch das Schalten des Kurzschlussschalters bzw. das Erreichen der Schalttemperatur des Kurzschlussschalters fernübertragbar ist.

Im Einzelnen gibt nun eine Vielzahl von Möglichkeiten, das erfindungsgemäße Überspannungsschutzelement auszugestalten und weiterzubilden. Dazu wird verwiesen sowohl auf die dem Patentanspruch 1 nachgeordneten Patentansprüche als auch auf die nachfolgende Beschreibung bevorzugter Ausführungsbeispiele in Verbindung mit der Zeichnung. In der Zeichnung zeigen
- Fig. 1: ein Überspannungsschutzelements, mit abgenommenem Deckel,
- Fig. 2: eine Explosionsdarstellung des Überspannungsschutzelement gemäß Fig. 1,
- Fig. 3: eine Schnittdarstellung des Überspannungsschutzelements, mit einem Kurzschlussbügel im Normalzustand der Varistoren und im Kurzschlussfall,
- Fig. 4: eine Schnittdarstellung einer Variante des Überspannungsschutzgeräts gemäß Fig. 1,
- Fig. 5: ein Überspannungsschutzelements, mit abgenommenem Deckel,
- Fig. 6: eine Explosionsdarstellung des Überspannungsschutzelement gemäß Fig. 5 und

- Fig. 7: eine Schnittdarstellung eines Teils des Überspannungsschutzgeräts gemäß Fig. 1.

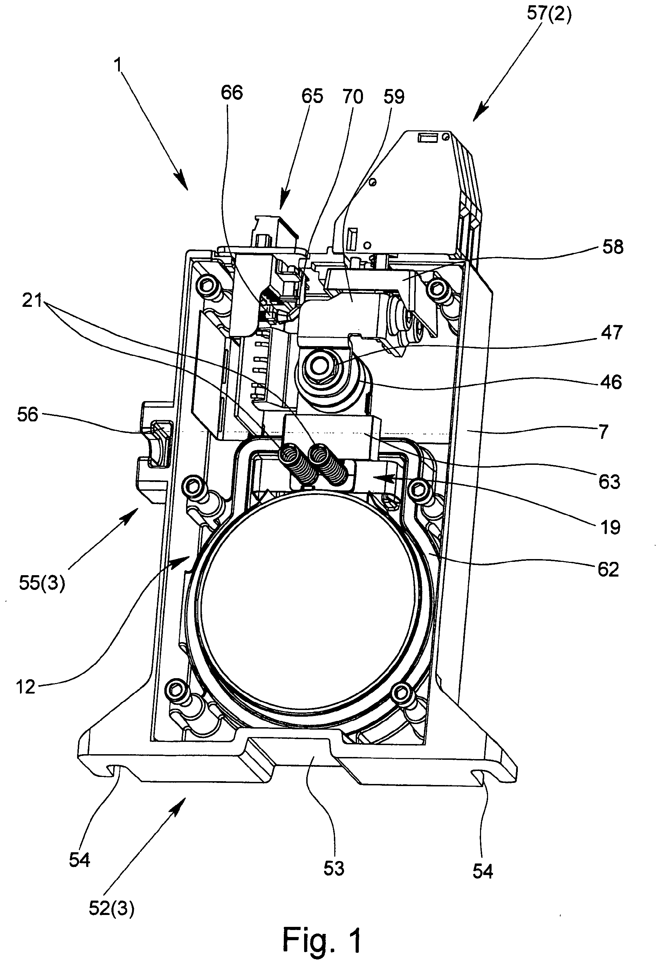

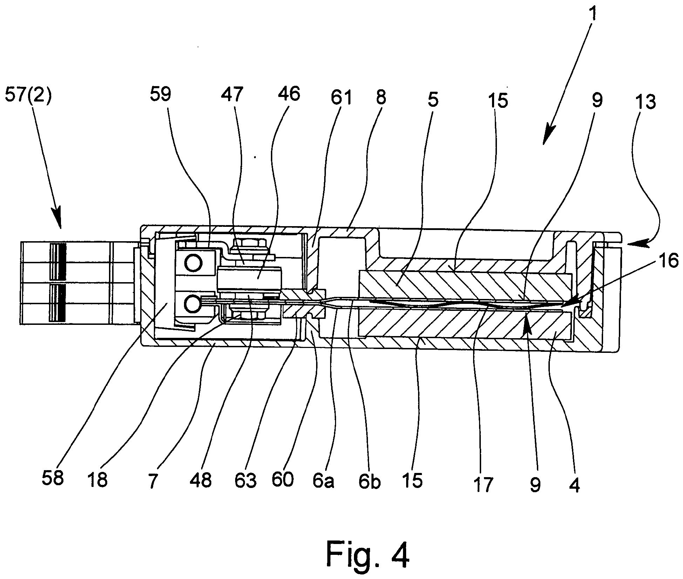

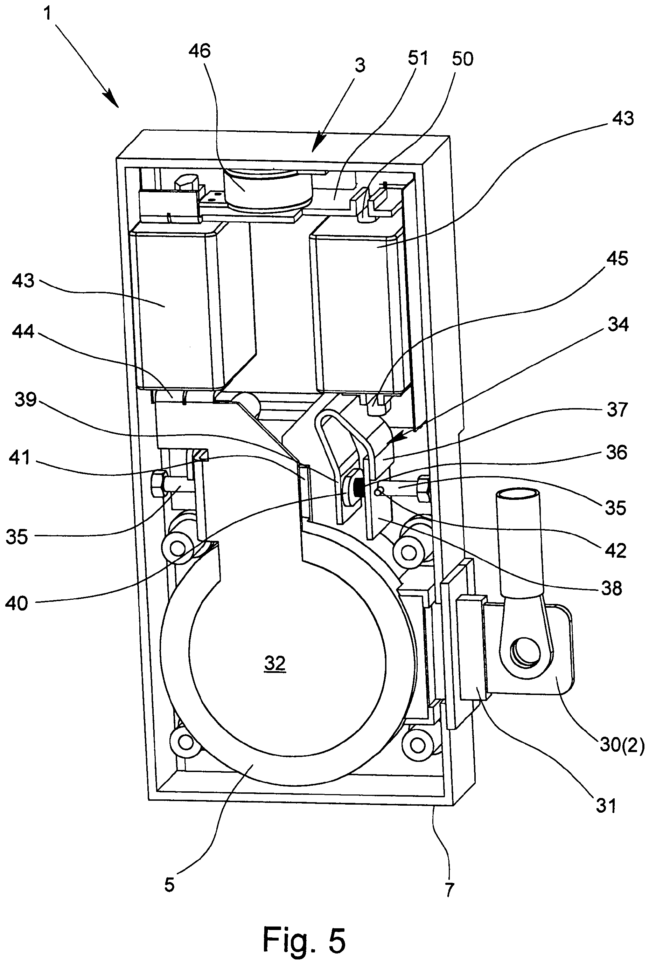

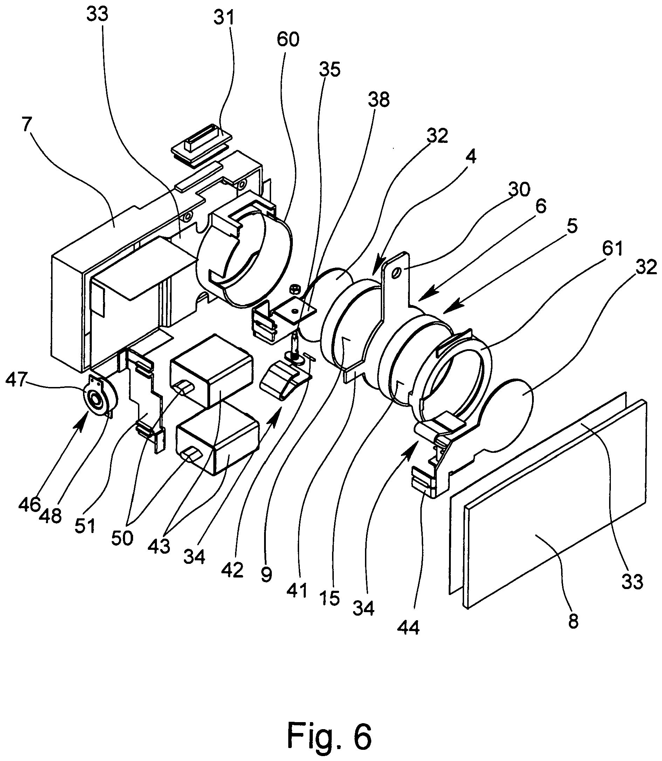

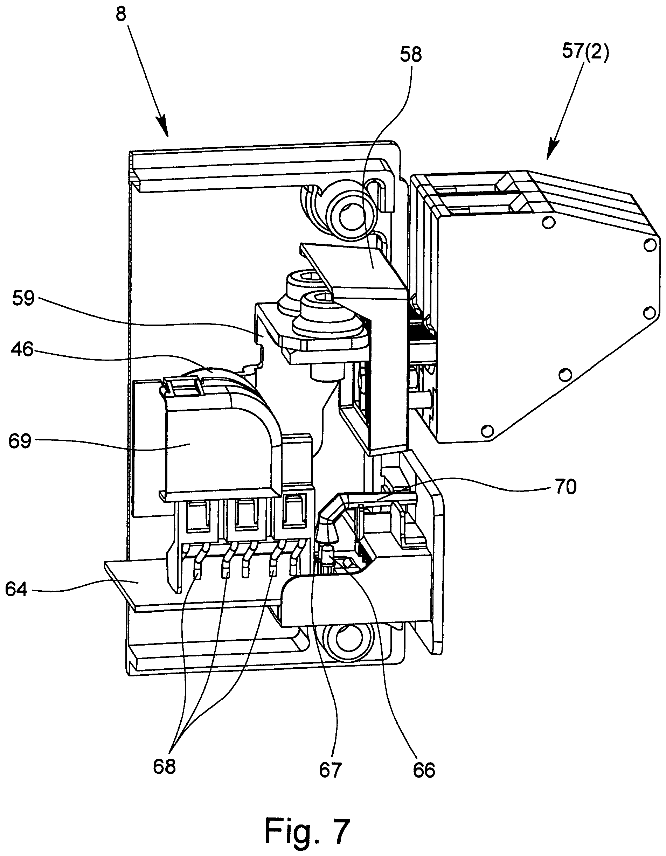

Die Figuren zeigen zwei Beispiele eines Überspannungsschutzelements 1, wobei eine erste Ausführungsform, insbesondere in den Fig. 1, 2 und 3 und eine zweite Ausführungsform in den Fig. 5 und 6 dargestellt ist. Abweichend von den dargestellten Ausführungsformen müssen nicht alle in dem Gehäuse dargestellten Bauelemente bei dem erfindungsgemäßen Überspannungsschutzelement 1 verwirklicht sein. Darüber hinaus können einzelne bei einer Ausführungsform dargestellte Merkmale auch bei der anderen Ausführungsform realisiert sein. Auch können insbesondere die in den Fig. 4 und 7 dargestellten Merkmale sowohl bei der ersten Ausführungsform als auch bei der zweiten Ausführungsform verwirklicht sein.

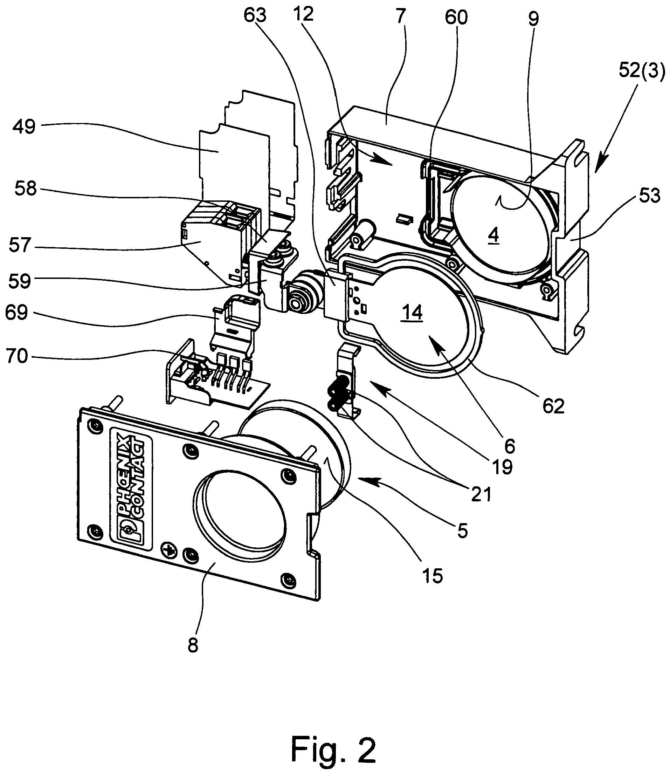

Das in den Figuren dargestellte Überspannungsschutzelement 1 weist ein Gehäuse mit Anschlüssen 2, 3 zum elektrischen Anschluss des Überspannungsschutzelements 1 an einen zu schützenden Strom- oder Signalpfad auf. Im Inneren des Gehäuses sind zwei elektrisch parallel geschaltete Varistoren 4, 5 angeordnet, die jeweils eine kreisförmige Grundfläche aufweisen, wobei der Durchmesser der beiden Varistoren 4, 5 - von toleranzbedingten Abweichungen abgesehen - gleich ist. Zwischen den beiden Varistoren 4, 5 ist eine Mittenelektrode 6 angeordnet, die gegenüber den beiden, das Gehäuse bildenden Gehäusehälften 7, 8 isoliert ist. Die Mittenelektrode 6 ist mit ihren einander gegenüberliegenden Seiten jeweils elektrisch leitend mit einem ersten Anschlussbereich 9 der beiden Varistoren 4, 5 verbunden, wobei die beiden Varistoren 4, 5 und die Mittenelektrode 6, so wie dies insbesondere aus den Fig. 2 und 6 ersichtlich ist, sandwichartig zwischen den beiden Gehäusehälften 7, 8 angeordnet sind.

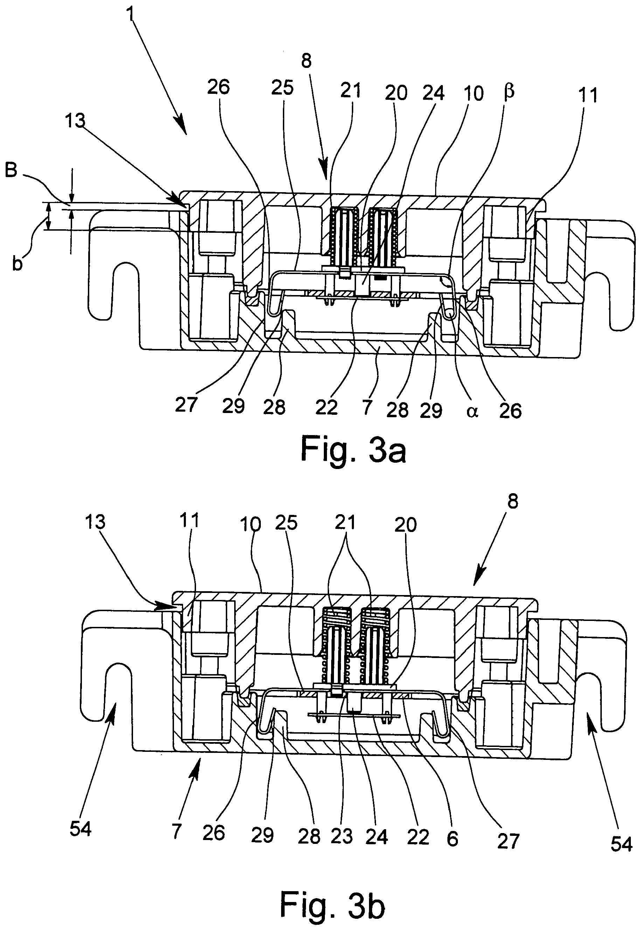

Insbesondere aus den Fig. 2 und 3 ist ersichtlich, dass die beiden Gehäusehälften 7, 8 unterschiedlich ausgebildet sind, wobei die zweite Gehäusehälfte 8 als Deckel ausgebildet ist, der einen Deckabschnitt 10 und einen zurückspringenden Eingriffsabschnitt 11 aufweist. Im verbundenen Zustand der beiden Gehäusehälften 7, 8 (vgl. Fig. 3) greift der Eingriffsabschnitt 11 des Deckels 8 in den von der ersten Gehäusehälfte 7 gebildeten korrespondierenden Aufnahmeraum 12, während der Aufnahmeraum 12 von dem Deckabschnitt 10 überdeckt wird. Aus Fig. 3 ist darüber hinaus erkennbar, dass auch im verbundenen Zustand der beiden Gehäusehälften 7, 8 zwischen den beiden Gehäusehälften 7, 8 eine Sichtfuge 13 vorhanden ist. Die Breite B der Sichtfuge 13 variiert dabei in Abhängigkeit von der Dicke der beiden Varistoren 4, 5. Die beiden Gehäusehälften 7, 8 sind dabei so ausgebildet, dass - jedenfalls bei Verwendung der zulässigen Varistoren 4, 5 - die maximale Breite B der Sichtfuge 13 stets kleiner als die korrespondierende Erstreckung, d. h. die Breite b des Eingriffsabschnitts 11 ist.

Durch die Ausbildung der Sichtfuge 13 kann auf einfache Art und Weise eine herstellungsbedingte Dickentoleranz der Varistoren 4, 5 ausgeglichen werden, ohne dass zusätzliche Elemente für den Toleranzausgleich erforderlich sind. Der erforderliche Kontaktdruck zwischen den beiden Gehäusehälften 7, 8 und den Varistoren 4, 5 bzw. zwischen den Varistoren 4, 5 und der Mittenelektrode 6 kann einfach durch Verschrauben der beiden Gehäusehälften 7, 8 erreicht werden.

Die Mittenelektrode 6 weist einen flächigen Abschnitt 14 auf, dessen Abmessung bzw. dessen Durchmesser im Wesentlichen dem Durchmesser der Varistoren 4, 5 entspricht, so dass die den beiden Seiten der Mittenelektrode 6 gegenüberliegenden ersten Anschlussbereiche 9 der Varistoren, die mit einer Metallisierung versehen sind, flächig von der Mittenelektrode 6 kontaktiert werden. Bei der Ausführungsform gemäß den Fig. 1 und 2 werden die Varistoren 4, 5 mit ihrem zweiten Anschlussbereich 15 direkt von den beiden Gehäusehälften 7, 8 kontaktiert, so dass beide Anschlussbereiche 9, 15 der beiden Varistoren 4, 5 flächig kontaktiert werden, wodurch ein niederimpedanter Anschluss der Varistoren 4, 5 erreicht wird. Die flächige Verbindung der beiden Varistoren 4, 5 mit den beiden Gehäusehälften 7, 8 führt darüber hinaus dazu, dass eine optimale Wärmeabfuhr von den Varistoren 4, 5 zum Gehäuse gegeben ist, was sich positiv auf die Leistungsfähigkeit und die Lebensdauer der Varistoren 4, 5 auswirkt.

In Fig. 4 ist eine Variante des Überspannungsschutzelements 1 gemäß den Fig. 1 bis 3 dargestellt, bei der die Mittenelektrode 6 aus zwei parallel zueinander angeordneten und elektrisch miteinander verbundenen Metallteilen 6a, 6b besteht. Im Bereich zwischen den beiden Varistoren 4, 5 sind die beiden Metallteile 6a, 6b voneinander beabstandet, wobei in dem so gebildeten Zwischenraum 16 ein Federelement 17, vorzugsweise eine Wellenfeder, angeordnet ist. Durch das Federelement 17 werden die beiden Metallteile 6a, 6b auseinandergedrückt, so dass die beiden Metallteile 6a, 6b mit ihren einander abgewandten Seiten jeweils gegen den ersten Anschlussbereich 9 eines Varistors 4, 5 gedrückt werden und somit die beiden Varistoren 4, 5 kontaktieren. In dem außerhalb der beiden Varistoren 4, 5 angeordneten Bereich sind die beiden Metallteile 6a, 6b dagegen direkt flächig miteinander verbunden, wobei die beiden Metallteile 6a, 6b in diesem Bereich über eine Sicherungsmutter 18 fixiert sind. Die Herstellung der beiden Metallteile 6a, 6b ist dadurch besonders einfach, dass die beiden Metallteile 6a, 6b gleich ausgebildet und abgebogen bzw. abgewinkelt sind und lediglich um 180° gedreht zueinander montiert werden.

Bei den in den Figuren dargestellten Beispielen eines Überspannungsschutzelements 1 ist innerhalb des Gehäuses mindestens ein temperaturabhängiger Kurzschlussschalter angeordnet, so dass bei Erreichen einer vorgegebenen Grenztemperatur T₁ aufgrund einer übermäßigen Erwärmung mindestens eines Varistors 4, 5 entweder beide Varistoren 4, 5 (Ausführungsform 1) oder nur der erwärmte Varistor 4, 5 (Ausführungsform 2) kurzgeschlossen wird. Dadurch wird verhindert, dass aufgrund einer zu starken Erwärmung eines Varistors 4, 5 eine Brandgefahr entsteht, die nicht nur zu einer Zerstörung eines Varistors 4, 5 sondern darüber hinaus auch zur Zerstörung weiterer Bauteile sowie ggf. zu einer Beschädigung benachbarter Geräte oder gar zu einer Gefährdung von Personen führen könnte.

Bei dem Beispiel gemäß den Fig. 1 bis 3 ist innerhalb des Gehäuses nur ein Kurzschlussschalter vorgesehen, der einen Kurzschlussbügel 19, ein mit dem Kurzschlussbügel 19 mechanisch verbundenes isolierendes Halteelement 20, zwei Federelemente 21 und ein Haltemetall 22 aufweist. Im Normalzustand der Varistoren 4, 5, der in Fig. 3a dargestellt ist, ist der Kurzschlussbügel 19 beabstandet von der Mittelelektrode 6 angeordnet, obwohl das Halteelement 20 von den entgegen ihrer Federkraft zusammengedrückten Federelementen 21 mit einer Federkraft in Richtung auf die Mittenelektrode 6 beaufschlagt ist. Im Normalzustand der Varistoren 4, 5 ist der Kurzschlussbügel 19 nämlich dadurch in der ersten, von der Mittelelektrode 6 beabstandeten Position gehalten, dass sich das Halteelement 20 mit einem durch eine Öffnung 23 in der Mittenelektrode 6 ragenden Abstandselemente 24 am Haltemetall 22 abstützt, welches über eine Lötverbindung mit der Unterseite der Mittenelektrode 6 verbunden ist.

Kommt es zu einer übermäßigen Erwärmung der Varistoren 4, 5, so führt dies auch zu einer Erwärmung der Mittenelektrode 6, wodurch die Lötverbindung zwischen der Mittenelektrode 6 und dem Haltemetall 22 ab einer bestimmten Temperatur von beispielsweise 140 °C aufgetrennt wird. Das Haltemetall 22 bzw. die Lötverbindung kann somit nicht mehr die Gegenkraft zur Federkraft aufbringen. Dadurch wird das Haltemetall 22 aufgrund der Federkraft der Federelemente 21 von dem Abstandselement 24 des Halteelements 20 von der Mittenelektrode 6 weg - nach unten - gedrückt und der von dem Halteelement 20 gehaltene Kurzschlussbügel 19 wird auf die Mittenelektrode 6 gedrückt. In dieser zweiten Position des Halteelements 20 kontaktiert der Kurzschlussbügel 19 sowohl die Mittenelektrode 6 als auch die erste Gehäusehälfte 7, so dass die Varistoren 4, 5 über den Kurzschlussbügel 19 kurzgeschlossen sind (Fig. 3b). Da das Haltemetall 22 über Rastpunkte an den beiden am Halteelement 20 angeordneten Führungsstiften gehalten wird, wird ein Herabfallen des Haltemetalls 22 auch nach dem Auftrennen der Lötverbindung verhindert.

Der Kurzschlussbügel 19 ist im Normalzustand der Varistoren 4, 5 mechanisch unbelastet im Gehäuse angeordnet, nämlich von dem Halteelement 20 aufgenommen. Da der Kurzschlussbügel 19 zum Auftrennen der Lötverbindung zwischen der Mittenelektrode 6 und dem Haltemetall 22 nicht federnd ausgebildet sein muss, kann der Kurzschlussbügel 19 mit seinem Querschnitt und seinem Leitwert auf die elektrischen Anforderungen des Überspannungsschutzelements 1 im Kurzschlussfall optimal abgestimmt werden. Da die Federelemente 21 erst bei der Montage durch das Schließen des Deckels 8 gespannt werden, ist eine einfache und damit kostengünstige Montage der einzelnen Bauteile in der ersten Gehäusehälfte 7 möglich, da alle Bauteile frei von mechanischen Spannungen eingesetzt werden können; zusätzliche Fixierteile sind somit nicht erforderlich.

Wie aus Fig. 3 ersichtlich ist, weist der Kurzschlussbügel 19 einen U-Rücken 25 und zwei U-Schenkel 26 auf, die im Kurzschlussfall an korrespondierenden Kontaktabschnitten 27 des Gehäuseteils 7 anliegen. Benachbart zu den Kontaktabschnitten 27 sind an der Gehäusehälfte 7 Kontaktrippen 28 ausgebildet, die im Kurzschlussfall ebenfalls von den U-Schenkeln 26 des Kurzschlussbügels 19 kontaktiert werden. Hierzu weisen die Enden der U-Schenkel 26 jeweils einen zurückgebogenen Endabschnitt 29 auf, der im Kurzschlussfall jeweils an einer Kontaktrippe 28 anliegt.

Durch die U-förmige Ausgestaltung des Kurzschlussbügels 19 sowie die Ausbildung der zurückgebogenen Endabschnitte 29 der U-Schenkel 26 werden die dynamischen Stromkräfte im Kurzschlussfall zur Verbesserung der Kontakteigenschaften in vorteilhafter Weise ausgenutzt. In den U-Schenkeln 26 und den zurückgebogenen Endabschnitten 29, die zueinander einen Winkel α aufweisen, fließt im Kurzschlussfall ein gegenläufiger Strom, was dazu führt, dass die U-Schenkel 26 und die zurückgebogenen Endabschnitte 29 durch die Stromkräfte auseinander gebogen werden, d.h. der Winkel α vergrößert wird. Dies führt zu einer Vergrößerung der Kontaktkräfte zwischen dem Kurzschlussbügel 19 und dem Gehäuseteil 7 sowohl an den Kontaktabschnitten 27 als auch an den Kontaktrippen 28. Darüber hinaus wird der Kontaktdruck zwischen den U-Schenkeln 26 und den Kontaktabschnitten 27 auch dadurch vergrößert, dass sich der Winkel β zwischen dem U-Rücken 25 und den beiden U-Schenkeln 26 durch die Stromkräfte, die durch den Kurzschlussbügel 19 fließenden Kurzschlussstrom hervorgerufen werden, ebenfalls vergrößert. Insgesamt wird somit durch die bevorzugte Ausgestaltung des Kurzschlussbügels 19 sowie die Ausgestaltung der Gehäusehälfte 7 ein guter Stromübergang zwischen dem Kurzschlussbügel 19 und der Gehäusehälfte 7 erreicht.

Bei dem Beispiel gemäß den Fig. 5 und 6 ist beiden Varistoren 4,5 jeweils ein Kurzschlussschalter zugeordnet. Bei dieser Ausführungsform ist die Mittenelektrode 6 mit einer Anschlusselektrode 30 verbunden, die durch eine Gehäusedurchführung 31 isoliert in das Gehäuseinnere geführt ist. Über die Anschlusselektrode 30 kann die Mittenelektrode 6 mit einem aktiven Leiter verbunden werden. Die zweiten Anschlussbereiche 15 der beiden Varistoren 4, 5 sind jeweils von einem Verbindungsmetall 32, welches jeweils auf der der Mittenelektrode 6 abgewandten Seite der Varistoren 4, 5 angeordnet ist, kontaktiert. Zwischen den Gehäusehälften 7, 8 und den Verbindungsmetallen 32 ist jeweils ein Isolationselement 33, das beispielsweise von einer Silikonfolie oder einem Isolierpapier gebildet sein kann, angeordnet, wodurch die beiden Verbindungsmetalle 32 gegenüber den Gehäusehälften 7, 8 isoliert sind.

Die beiden Kurzschlussschalter weisen jeweils einen flexiblen Leiterabschnitt 34, einen Betätigungsstift 35 und ein Federelement 36 auf. Das erste Ende 37 eines flexiblen Leiterabschnitts 34 ist dabei mit einem Kontaktabschnitt 38 eines Verbindungsmetalls 32 und das zweite Ende 39 des flexiblen Leiterabschnitts 34 mit einem Ende 40 des Betätigungsstifts 35 verbunden. Im Normalzustand des zugeordneten Varistors 4,5 (vgl. Fig. 5) ist das zweite Ende 39 des flexiblen Leiterabschnitts 34 beabstandet von einem Kontaktabschnitt 41 der Mittenelektrode 6 angeordnet. Dabei ist das Federelement 36, einen Abschnitt des Betätigungsstifts 35 umschließend, zwischen dem Kontaktabschnitt 38 des Verbindungsmetalls 32 und dem tellerförmigen Ende 40 des Betätigungsstifts 35 angeordnet, wobei das Federelement 36 entgegen seiner Federkraft zusammengedrückt ist. Der Betätigungsstift 35 wird durch ein thermosensitives Element 42 in Form eines Stiftes entgegen der Federkraft des Federelements 36 in dieser ersten Position gehalten.

Kommt es zu einer Erwärmung des Varistors 4,5, so führt dies ebenfalls zu einer Erwärmung des zugeordneten Verbindungsmetalls 32 sowie des Kontaktabschnitts 38, wodurch auch das thermosensitive Element 42 erwärmt wird, bis es bei Erreichen einer bestimmten Grenztemperatur seine Festigkeit verliert, so dass es die Gegenkraft zur Federkraft des Federelements 36 nicht mehr aufbringen kann. Der Betätigungsstift 35 wird dann durch das Federelement 36 - in der Darstellung gemäß Fig. 3 - nach unten gedrückt und damit das zweite Ende 39 des flexiblen Leiterabschnitts 34 in eine zweite Position verbracht, in der das zweite Ende 39 den Kontaktabschnitt 41 der Mittenelektrode 6 kontaktiert, so dass der Varistor 4, 5, über den flexiblen Leiterabschnitt 34 kurzgeschlossen ist. Der Betätigungsstift 35 ist dabei in einem im Kontaktabschnitt 38 des Verbindungsmetalls 32 ausgebildeten Loch geführt. Als Material für den thermosensitive Stift 42 kann ein Kunststoff oder ein Metall verwendet werden, das bei der vordefinierten Temperatur seine Festigkeit verliert, so dass es zu dem gewollten Kurzschluss des überhitzten Varistors 4, 5 kommt, indem die Mittenelektrode 6 über den flexiblen Leiterabschnitt 34 mit dem Verbindungsmetall 32 elektirsch leitend verbunden wird.

Bei der in den Fig. 5 und 6 dargestellten Beispielen des Überspannungsschutzelements 1 ist den beiden Varistoren 4, 5 jeweils noch eine Vorsicherung 43 zugeordnet. Ein entsprechender Kontaktabschnitt 44 der Verbindungsmetalle 32 kontaktiert dabei jeweils einen ersten Anschluss 45 der zugeordneten Vorsicherung 43.

Sowohl bei der in den Fig. 1 und 2 dargestellten Beispielen als auch bei der in den Fig. 5 und 6 dargestellten Ausführungsform des Überspannungsschutzelements 1 ist außerdem zusätzlich zu den beiden Varistoren 4, 5 noch ein gasgefüllter Überspannungsableiter 46 als weiterer Ableiter im Gehäuse angeordnet. Der gasgefüllte Überspannungsableiter 46 ist dabei in Reihe zur Parallelschaltung der beiden Varistoren 4, 5 angeordnet. Dadurch, dass den parallel geschalteten Varistoren 4, 5 noch ein gasgefüllte Überspannungsableiter 46 in Reihe geschaltet ist, weist das Überspannungsschutzelement 1 auch dann noch eine Überspannungsschutzfunktion auf, wenn ein Varistor oder beide Varistoren 4, 5 kurzgeschlossen sind. Tritt nach dem Kurzschließen der Varistoren 4, 5 eine Überspannung auf, so führt dies zum Zünden des gasgefüllten Überspannungsableiters 46, so dass ein Gerät oder eine Anlage, zu dessen Schutz das Überspannungsschutzelement 1 eingesetzt ist, durch die Überspannung nicht beschädigt wird.

Bei dem Beispiel gemäß den Fig. 1 und 2 ist der erste Anschluss 47 des gasgefüllten Überspannungsableiters 46 mit dem ersten Anschluss 2 des Überspannungsschutzelements 1 zum Anschluss eines aktiven Leiters und der zweite Anschluss 48 mit der Mittenelektrode 6 elektrisch leitend verbunden. Im Bereich des gasgefüllten Überspannungsableiters 46 ist dabei eine zusätzliche Isolation 49 innerhalb des Gehäuses angeordnet, die zumindest den weiteren Überspannungsableiter 46 und den Verbindungsbereich des ersten Anschlusses 47 des Überspannungsableiter 46 mit einem ersten Anschluss 2 des Überspannungsschutzelements 1 gegenüber dem Gehäuse zusätzlich isoliert. Hierdurch werden die Luft- und Kriechstrecken vergrößert, so dass die Montage des gasgefüllten Überspannungsableiters 46 in einem reduzierten Bauraum erfolge kann.

Bei dem Beispiel gemäß den Fig. 5 und 6 ist der erste Anschluss 47 des gasgefüllten Überspannungsableiters 46 dagegen mit dem Gehäuse, genau genommen mit der Gehäusehälfte 7, und der zweite Anschluss 48 über die beiden Vorsicherungen 43 mit den beiden Verbindungsmetallen 32 verbunden. Damit die beiden Vorsicherungen 43 parallel mit dem zweiten Anschluss 48 des gasgefüllten Überspannungsableiters 46 elektrisch verbunden werden können, ist zwischen dem zweiten Anschluss 48 des gasgefüllten Überspannungsableiters 46 und den zweiten Anschlüssen 50 der Vorsicherungen 43 ein Kontaktmetall 51 angeordnet.

Bei einer - hier nicht dargestellten - Variante der Ausführung gemäß den Fig. 5 und 6 sind die beiden thermischen Kurzschlussschalter und die beiden Vorsicherungen 43 durch jeweils eine Sicherung mit einem Schmelzleiter ersetzt. Die beiden Sicherung sind dann jeweils einerseits über ein Verbindungsmetall 32 mit einem Varistor 4, 5 und andererseits über das Kontaktmetall 51 mit dem gasgefüllten Überspannungsableiter 46 verbunden. Eine Erwärmung eines Varistors überträgt sich so auf die Sicherungen, so dass der aus einem niedrig schmelzenden Material bestehende Schmelzleiter thermisch zerstört wird. Im Kurzschlussfall wird der Schmelzleiter durch den dann fließenden Kurzschlussstrom zerstört, so dass in beiden Fällen der zugeordnete Varistor elektrisch vom Stromkreis abtrennt wird.

Um das metallische Gehäuse mit Bezugspotential (PE) verbinden zu können, weist die Gehäusehälfte 7 gemäß Fig. 1 und 2 als zweiten Anschluss 3 einen Befestigungsbereich 52 auf, mit dem die Gehäusehälfte 7 an einer Montageplatte befestigt werden kann. An der Unterseite des Befestigungsbereichs 52 ist eine Vertiefung 53 in der Gehäusehälfte 7 ausgebildet, mit der eine eventuell vorhandene Tragschiene überbaut werden kann. Mit Hilfe von in den Befestigungsnuten 54 eingesetzten Schrauben kann das Gehäuse dann sicher befestigt werden, wobei gleichzeitig eine elektrische Verbindung der Gehäusehälfte 7 mit der Montageplatte erfolgt. Zusätzlich ist seitlich an der Gehäusehälfte 7 noch ein Schutzleiteranschluss 55 als zweiten Anschluss 3 ausgebildet, über den ein Schutzleiter mit dem Gehäuse elektrisch verbunden werden kann. Der Schutzleiteranschluss 55 weist hierzu eine Aufnahmenut 56 auf, in die zum Anschluss eines mit einem Schutzleiter verbundenen Ringkabelschuhs eine Schraube verdrehsicher eingeschoben und gegen die Seitenwand der Gehäusehälfte 7 gepresst werden kann. Auch bei dem Ausführungsbeispiel gemäß den Fig. 5 und 6 kann als zweiter Anschluss 3 ein entsprechender Befestigungsbereich und vorzugsweise auch ein Schutzleiteranschluss ausgebildet sein.

Bei dem Beispiel gemäß den Fig. 1 und 2 ist an der Oberseite der Gehäusehälfte 7 eine Hochstromdurchführungsklemme 57 als erster Anschluss 2 befestigt, über die das Potential eines aktiven Leiters isoliert und hochstromtragfähig in das Gehäuseinnere geführt wird. Ein Isloierteil 58 erhöht die Luft- und Kriechstrecken in diesem Bereich zusätzlich und dient gleichzeitig als Drehmomentenstütze beim Anschließen der Leiter. Über einen Anschlusswinkel 59 sind die beiden Anschlüsse der Hochstromdurchführungsklemme 57 mit dem ersten Anschluss 47 des gasgefüllten Überspannungsableiters 46 elektrisch verbunden. Die Anschlüsse der Hochstromdurchführungsklemme 57 kann dadurch als Parallelschaltung verdrahtet werden.

Aus den Fig. 1 und 2 ist darüber hinaus noch entnehmbar, dass innerhalb des Gehäuses ein zumindest die Varistoren 4, 5, den Abschnitt 14 der Mittenelektrode 6 und die Kurzschlussschalter umgebendes zweiteiliges Innengehäuse ausgebildet ist, das aus einem mit der ersten Gehäusehälfte 7 verbundenen ersten Gehäuseteil 60 und einem mit dem Deckel 8 verbundenen zweiten Gehäuseteil 61 besteht. Um eine vollständige Abdichtung des Innengehäuses zu erreichen, ist in eine Nut in dem ersten Gehäuseteil 60 eine Dichtschnur 62 eingelegt und auf der Mittenelektrode 6 eine isolierende Durchführung 63 aufgeschoben, durch die die Mittenelektrode 6 in das Innengehäuse eingeführt und damit gegenüber dem Gehäuse isoliert ist.

Fig. 7 zeigt ein Beispiel einer Anzeigeeinrichtung zur Anzeige des Zustandes der Varistoren 4, 5, die sowohl eine optische Anzeige am Gehäuse als auch eine fernübertragbare Zustandsanzeige ermöglicht. Die Anzeigeeinrichtung weist eine Leiterplatte 64 auf, die mit einer Grundleiste eines aus dem Gehäuse herausgeführten Steckers 65 verbunden ist. Über den Stecker 65 wird die örtliche optische Anzeigeeinrichtung mit einer Hilfsenergie betrieben. Auf der Leiterplatte 64 befindet sich eine im Normalzustand leuchtende grüne LED 66 und eine im Normalzustand nicht leuchtende rote LED 67. Außerdem sind mehrere Temperatursicherungen 68 vorgesehen, die einerseits mit der Leiterplatte 64 verbunden sind und andererseits über den Temperatursicherungshalter 69, der an der Mittenelektrode 6 befestigt ist, in gutem thermischen Kontakt zur Mittenelektrode 6 stehen.

Erreicht die Temperatur der Mittenelektrode 6 eine erste vorgegebene Grenztemperatur, so löst die erste Temperatursicherung 68 aus, was dazu führt, dass die den fehlerfreien Zustand anzeigende grüne LED 66 erlischt. Gleichzeitig beginnt die rote LED 67 zu leuchten, wodurch ein Fehlerfall angezeigt wird. Über einen Lichtleiter 70 wird das Licht der LEDs 66, 67 zu einem Anzeigefenster in der Oberseite der Gehäusehälfte 7 geleitet. Eine zweite Temperatursicherung 68 ist als fernübertragbare Funktionsanzeige über den Stecker 65 abfragbar. Über die dritte Temperatursicherung 68, die in ihrer Auslösetemperatur auf das Schalten des Kurzschlussschalters abgestimmt ist, kann das Erreichen der Schalttemperatur des Kurzschlussschalters abgefragt werden.

## Patentansprüche

1. Überspannungsschutzelement mit einem Gehäuse, mit Anschlüssen (2, 3) zum elektrischen Anschluss des Überspannungsschutzelements (1) an den zu schützenden Strom- oder Signalpfad, mit zwei im Inneren des Gehäuses angeordneten und elektrisch parallel geschalteten Varistoren (4, 5) und mit einer zumindest teilweise zwischen den Varistoren (4, 5) angeordneten Mittenelektrode (6), wobei das Gehäuse zwei aus Metall bestehende, elektrisch miteinander verbundene Gehäusehälften (7, 8) aufweist, wobei die Mittenelektrode (6) gegenüber den Gehäusehälften (7, 8) isoliert ist und mit ihren einander gegenüberliegenden Seiten jeweils elektrisch mit einem ersten Anschlussbereich (9) eines Varistors (4, 5) verbunden ist, und wobei die beiden Varistoren (4, 5) und die Mittenelektrode (6) sandwichartig zwischen den beiden Gehäusehälften (7, 8) angeordnet sind,
**dadurch gekennzeichnet,**
**dass** mindestens ein temperaturabhängiger Kurzschlussschalter derart innerhalb des Gehäuses angeordnet ist, dass bei Erreichen einer vorgegebenen Grenztemperatur T₁ aufgrund einer übermäßigen Erwärmung mindestens eines Varistors (4, 5) mindestens ein Varistor (4, 5) kurzgeschlossen wird,
**dass** die beiden Gehäusehälften (7, 8) jeweils elektrisch mit einem zweiten Anschlussbereich (15) eines Varistors (4, 5) verbunden sind,
**dass** der Kurzschlussschalter einen Kurzschlussbügel (19), ein mit dem Kurzschlussbügel (19) mechanisch verbundenes isolierendes Halteelement (20), mindestens ein Federelement (21) und ein Haltemetall (22) aufweist,
wobei im Normalzustand der Varistoren (4, 5) der Kurzschlussbügel (19) dadurch entgegen der am Haltelement (20) angreifenden Federkraft des Federelements (21) beabstandet von der Mittenelektrode (6) angeordnet ist, dass sich das Halteelement (20) mit einem durch eine Öffnung (23) in der Mittenelektrode (6) ragenden Abstandselement (24) am über eine Lötverbindung mit der Mittenelektrode (6) verbundenen Haltemetall (22) abstützt, und
wobei beim Auftrennen der Lötverbindung aufgrund einer Erwärmung der Varistoren (4, 5) das Halteelement (20) mit dem Kurzschlussbügel (19) durch die Federkraft des Federelements (21) in eine zweite Position verbracht wird, in der der Kurzschlussbügel (19) sowohl die Mittenelektrode (6) als auch das Gehäuse kontaktiert, so dass die Varistoren (4, 5) über den Kurzschlussbügel (19) kurzgeschlossen sind.

2. Überspannungsschutzelement nach Anspruch 1, **dadurch gekennzeichnet, dass** der Kurzschlussbügel (19) einen U-Rücken (25) und zwei U-Schenkel (26) aufweist, wobei die Enden der U-Schenkel (26) im Kurzschlussfall an korrespondierenden Kontaktabschnitten (27) an der Gehäusehälfte (7) anliegen.

3. Überspannungsschutzelement nach Anspruch 2, **dadurch gekennzeichnet, dass** die Gehäusehälfte (7) zwei Kontaktrippen (28) aufweist, die jeweils benachbart zu den Kontaktabschnitten (27) angeordnet sind, und dass die Enden der U-Schenkel (26) des Kurzschlussbügels (19) jeweils einen zurückgebogenen Endabschnitt (29) aufweisen, wobei die Endabschnitte (29) der U-Schenkel (26) im Kurzschlussfall jeweils an einer Kontaktrippe (28) und ein gegenüberliegenden Bereich der U-Schenkel (26) an dem gegenüberliegenden Kontaktabschnitt (27) anliegen.

4. Überspannungsschutzelement mit einem Gehäuse, mit Anschlüssen (2, 3) zum elektrischen Anschluss des Überspannungsschutzelements (1) an den zu schützenden Strom- oder Signalpfad, mit zwei im Inneren des Gehäuses angeordneten und elektrisch parallel geschalteten Varistoren (4, 5) und mit einer zumindest teilweise zwischen den Varistoren (4, 5) angeordneten Mittenelektrode (6), wobei das Gehäuse zwei aus Metall bestehende, elektrisch miteinander verbundene Gehäusehälften (7, 8) aufweist, wobei die Mittenelektrode (6) gegenüber den Gehäusehälften (7, 8) isoliert ist und mit ihren einander gegenüberliegenden Seiten jeweils elektrisch mit einem ersten Anschlussbereich (9) eines Varistors (4, 5) verbunden ist, und wobei die beiden Varistoren (4, 5) und die Mittenelektrode (6) sandwichartig zwischen den beiden Gehäusehälften (7, 8) angeordnet sind,
**dadurch gekennzeichnet,**
**dass** mindestens ein temperaturabhängiger Kurzschlussschalter derart innerhalb des Gehäuses angeordnet ist, dass bei Erreichen einer vorgegebenen Grenztemperatur T₁ aufgrund einer übermäßigen Erwärmung mindestens eines Varistors (4, 5) mindestens ein Varistor (4, 5) kurzgeschlossen wird,
**dass** die Mittenelektrode (6) mit einem ersten Anschluss (2) zum Anschluss mindestens eines aktiven Leiters (L) des zu schützenden Strom- oder Signalpfads verbunden ist, dass zwischen den beiden Gehäusehälften (7, 8) und den zugewandten zweiten Anschlussbereichen (15) der beiden Varistoren (4, 5) jeweils ein Verbindungsmetall (32) angeordnet ist, wobei die Verbindungsmetalle (32) jeweils durch ein Isolationselement (33) von den Gehäusehälften (7, 8) isoliert sind,
**dass** den beiden Varistoren (4, 5) jeweils ein Kurzschlussschalter zugeordnet ist, wobei die Kurzschlussschalter jeweils einen flexiblen Leiterabschnitt (34), einen Betätigungsstift (35) und ein Federelement (36) aufweisen,
**dass** das erste Ende (37) eines flexiblen Leiterabschnitts (34) jeweils elektrisch mit einem Kontaktabschnitt (38) eines Verbindungsmetalls (32) und das zweite Ende (39) eines flexiblen Leiterabschnitts (34) jeweils mit einem Ende (40) des zugehörigen Betätigungsstifts (35) verbunden ist,
wobei im Normalzustand der Varistoren (4, 5) das zweite Ende (39) eines flexiblen Leiterabschnitts (34) dadurch entgegen der am Betätigungsstift (35) angreifenden Federkraft des Federelements (36) beabstandet von einem Kontaktabschnitt (41) der Mittenelektrode (6) angeordnet ist, dass der Betätigungsstift (35) durch ein thermosensitives Element (42) in seiner ersten Position gehalten wird, und
wobei beim Erweichen des thermosensitiven Elements (42) aufgrund einer Erwärmung der Varistoren (4, 5) das zweite Ende (39) eines flexiblen Leiterabschnitts (34) durch die am Betätigungsstift (35) angreifende Federkraft des Federelements (36) in eine zweite Position verbracht wird, in der das zweite Ende (39) eines flexiblen Leiterabschnitt (34) den Kontaktabschnitt (41) der Mittenelektrode (6) kontaktiert, so dass der jeweilige Varistoren (4, 5) über einen flexiblen Leiterabschnitt (34) kurzgeschlossen ist.

5. Überspannungsschutzelement nach Anspruch 4, **dadurch gekennzeichnet, dass** die Betätigungsstifte (35) jeweils in einem Loch (42) im zugeordneten Kontaktabschnitt (38) des Verbindungsmetalls (32) geführt sind, dass die Federelemente (36) jeweils zwischen dem Ende (40) der Betätigungsstifte (35) und dem Kontaktabschnitt (38) des Verbindungsmetalls (32) angeordnet sind und dass in den Betätigungsstiften (35) jeweils ein thermosensitiver Stift (42) in einer Ausnehmung angeordnet ist, wobei sich der Stift (42) im Normalzustand der Varistoren (4, 5) auf der dem Federelement (36) gegenüberliegenden Seite des Kontaktabschnitts (38) des Verbindungsmetalls (32) befindet und der Stift (42) bei einer Erwärmung seine Festigkeit verliert, so dass der Betätigungsstift (35) nicht mehr durch den Stift (42) entgegen der Federkraft des Federelements (36) in seiner ersten Position gehalten wird.

6. Überspannungsschutzelement nach Anspruch 4 oder 5, **dadurch gekennzeichnet, dass** den beiden Varistoren (4, 5) jeweils eine Vorsicherung (43), insbesondere einer Schmelzsicherung zugeordnet ist, und dass die Verbindungsmetalle (32) jeweils einen zweiten Kontaktabschnitt (44) aufweisen, der jeweils mit einem ersten Anschluss (45) einer Vorsicherung (43) elektrisch leiten verbunden ist.

7. Überspannungsschutzelement nach einem der Ansprüche 1 bis 6, **dadurch gekennzeichnet, dass** mindestens eine Sicherung mit einem Schmelzleiter derart innerhalb des Gehäuses angeordnet und mit den Varistoren (4, 5) elektrisch leitend verbunden ist, dass die Sicherung sowohl bei Erreichen einer vorgegebenen Grenztemperatur aufgrund einer übermäßigen Erwärmung mindestens eines Varistors (4, 5) als auch beim Auftreten eines Kurschlusses auslöst und damit die Varistoren (4, 5) elektrisch vom Stromkreis abtrennt, wobei die Sicherung vorzugsweise einen Schmelzleiter aus einem niedrig schmelzenden Material, beispielsweise Zinn, und vorzugsweise eine Löschhilfe, beispielsweise Sand, aufweist.

8. Überspannungsschutzelement nach einem der Ansprüche 1 bis 7, **dadurch gekennzeichnet, dass** das Gehäuse einen Schutzleiteranschluss (55) als zweiten Anschluss (3) aufweist, über den ein Schutzleiter mit dem Gehäuse elektrisch verbindbar ist, wobei der Schutzleiteranschluss (55) vorzugsweise an der ersten Gehäusehälfte (7) angeordnet ist und eine Aufnahmenut (56) aufweist.

9. Überspannungsschutzelement nach einem der Ansprüche 1 bis 8, **dadurch gekennzeichnet, dass** innerhalb des Gehäuses eine zumindest die Varistoren (4, 5) und ggf. auch den oder die temperaturabhängigen Kurzschlussschalter umgebendes Innengehäuse ausgebildet ist, wobei das Innengehäuse zweiteilig ausgebildet ist und aus einem mit der ersten Gehäusehälfte (7) verbundenen ersten Gehäuseteil (60) und einem mit der zweiten Gehäusehälfte (8) verbundenen zweiten Gehäuseteil (61) besteht, wobei das Innengehäuse vorzugsweise noch mindestens ein Dichtelement (62, 63) aufweist.

10. Überspannungsschutzelement nach einem der Ansprüche 1 bis 9, **dadurch gekennzeichnet, dass** eine optische Anzeigeeinrichtung und/oder eine fernübertragbare Anzeigeeinrichtung zur Anzeige des Zustandes der Varistoren (4, 5) am Gehäuse ausgebildet bzw. angeordnet ist.

## Claims

1. Overvoltage protection element comprising a housing, terminals (2, 3) for electrically connecting the overvoltage protection element (1) to a current path or a signal path to be protected, two varistors (4, 5) electrically connected in parallel and located within the housing, and a middle electrode (6) located at least partially between the varistors (4, 5), wherein the housing has two metal housing halves (7, 8) electrically connected to one another, wherein the middle electrode (6) is electrically insulated from the housing halves (7, 8) and each opposite sides of the middle electrode (6) is electrically connected to a respective first connecting region (9) of each of the varistors (4, 5), and wherein the two varistors (4, 5) and the middle electrode (6) are sandwiched between the housing halves (7, 8),
**characterized in**
**that** at least one temperature-dependent short-circuit switch is arranged within the housing, such that, when a given boundary temperature T₁ is reached due to an excess heating of at least one of the varistors (4, 5), at least one varistor (4, 5) is short-circuited,
**that** the housing halves (7, 8) are each electrically connected to a second connecting region (15) of a varistor (4, 5),
**that** the short circuit switch has a shorting jumper (19), an insulating retaining element (20) mechanically connected to the shorting jumper (19), at least one spring element (21), and a retaining metal (22),
wherein in the normal state of the varistors (4, 5), the shorting jumper (19) is spaced apart from the middle electrode (6) against the spring force of the spring element (21) acting on the retaining element (20), that the retaining element is supported by a spacer element (24) projecting through an opening (23) in the middle electrode (6) on the retaining metal (22) connected to the middle electrode (6) via a solder connection, and
wherein, when the solder connection is broken due to heating of the varistors (4, 5), the retaining element (20) with the shorting jumper (19) is moved by the spring force of the spring element (21) into a second position, at which the shorting jumper (19) contacting both the middle electrode (6) and the housing, so that the varistors (4, 5) are short-circuited via the shorting jumper 19).

2. Overvoltage protection element according to claim 1, **characterized in that** the shorting jumper (19) has a U-back (25) and two U-legs (26), wherein the ends of the U-legs (26) adjoin corresponding contact sections (27) of the housing halve (7) in the case of short-circuit.

3. Overvoltage protection element according to claim 2, **characterized in that** the housing halve (7) has two contact ribs (28) located adjacent to the contact sections (27), and that the ends of the U-legs (26) of the shorting jumper (19) each have one bent-back end section (29), wherein in the case of short-circuit, each of the end sections (29) of the U-legs (26) adjoin one of the contact ribs (28) and an opposite region of the U-legs (26) adjoins an opposite one of the contact sections (27).

4. Overvoltage protection element comprising a housing, terminals (2, 3) electrically connecting the overvoltage protection element (1) to a current path or a signal path to be protected: two varistors (4, 5) electrically connected in parallel and located within the housing, a middle electrode (6) located at least partially between the varistors (4, 5), wherein the housing has two metal housing halves (7, 8) electrically connected to one another, wherein the middle electrode (6) is electrically insulated from the housing halves (7, 8), and each opposite sides of the middle electrode (6) is electrically connected to a respective first connecting region (9) of each of the varistors (4, 5) and wherein the two varistors (4, 5) and the middle electrode (6) are sandwiched between the housing halves (7, 8),
**characterized in**
**that** at least one temperature-dependent short-circuit switch is arranged within the housing, such that, when a given boundary temperature T₁ is reached due to an excess heating of at least one of the varistors (4, 5), at least one varistor (4, 5) is short-circuited,
**that** the middle electrode (6) is connected to a first terminal (2) for connecting of at least one active conductor (L) of the current path or the signal path to be protected, that a respective connecting metal (32) is arranged between the housing halves (7, 8) and the facing second connecting regions (15) of each of the varistors (4, 5), wherein the connecting metals (32) each are insulated from the housing halves (7, 8) by an insulating element (33),
**that** a short-circuit switch is assigned to the each of the varistors (4, 5), wherein each short-circuit switch has a flexible conductor section (34), an actuating pin (35), and a spring element (36),
**that** the first end (37) of a flexible conductor section (34) is electrically connected to a respective contact section (38) of the connecting metals (32) and the second end (39) of a flexible conductor section (34) is connected to a respective end (40) of the associated actuating pin (35),
wherein, in the normal state of the varistors (4, 5), the second end (39) of a flexible conductor section (34) is spaced apart from a contact section (41) of the middle electrode (6) against the spring force of the spring element (36) acting on the actuating pin (35), that the actuating pin (35) is held in its first position by a thermosensitive element (42), and
wherein, after the thermosensitive element (42) softens due to heating of the varistors (4, 5), the second end (39) of each flexible conductor section (34) is moved by the spring force of the spring element (36) acting on the actuating pin (35) into a second position, at which the second end (39) of a flexible conductor section (34) makes contact with the contact section (41) of the middle electrode (6), so that the respective varistor (4, 5) is short circuited via a flexible conductor section (34).

5. Overvoltage protection element according to claim 4, **characterized in that** the actuating pins (35) each are guided into a hole (42) in a corresponding contact section (38) of the connecting metal (32), that the spring elements (36) each are located between the end (40) of the actuating pins (35) and the contact section (38) of the connecting metal (32) and that a thermosensitive pin (42) is located in a recess in the actuating pins (35), wherein, in the normal state of the varistors (4, 5), the pin (42) is located on a side of the contact section (38) of the connecting metal (32) opposite the spring element (36), and the pin (42) loses its stability when heated, so that the actuating pin (35) is not longer held in its first position by the pin (42) under the spring force of the spring element (36).

6. Overvoltage protection element according to claim 4 or 5, **characterized in that** a back-up fuse (43), in particular a safety fuse, is assigned to each of the two varistors (4, 5), and the connecting metals (32) each have a second contact section (44), which is electrically connected to a respective first terminal (45) of a back-up fuse (43).

7. Overvoltage protection element according to any one of claims 1 to 6, **characterized in that** at least one fuse with a melting strip is arranged within the housing and electrically connected to the varistors (4, 5) such that the fuse is triggered, both when a predetermined limiting temperature is reached due to excessive heating of at least one varistor (4, 5) and when a short circuit occurs, and, thus, the the varistors (4, 5) are electrically separated from the circuit, wherein the fuse preferably has a safety fuse made of a material with a low melting point, for example tin, and preferably, a fire-extinguishing aid, for example sand.

8. Overvoltage protection element according to any one of claims 1 to 7, **characterized in that** the housing has a safety fuse terminal (55) as second terminal (3), via which a safety fuse can be electrically connected to the housing, wherein the safety fuse terminal (55) is preferably arranged on the first half of the housing (7) and has a mounting slot (56).

9. Overvoltage protection element according to any one of claims 1 to 8, **characterized in that** an inner housing is formed within the housing, surrounding at least the varistors (4, 5) and, optionally, the at least one temperature-dependent short-circuit switch, wherein the inner housing is designed as two pieces and consists of a first housing part (60) connected to the first housing half (7) and a second housing part (61) connected to the second housing half (8), wherein the inner housing preferably also has at least one sealing element (62,63).

10. Overvoltage protection element according to any one of claims 1 to 9, **characterized in that** a optical display device and/or a remote display device is designed and/or arranged on the housing for displaying the state of the varistor (4, 5).

## Revendications

1. Elément de protection contre les surtensions comportant un boîtier, des bornes (2, 3) pour le raccordement électrique de l'élément de protection contre les surtensions (1) au trajet de courant ou de signal à protéger, deux varistances (4, 5) électriquement connectées en parallèle, disposées à l'intérieur du boîtier, et une électrode centrale (6) au moins partiellement disposée entre les varistances (4, 5), dans lequel le boîtier comporte deux moitiés de boîtier (7, 8) reliées électriquement l'une à l'autre, constituées de métal, dans lequel l'électrode centrale (6) est isolée par rapport aux moitiés de boîtier (7, 8) et est respectivement reliée électriquement à une première zone de connexion (9) d'une varistance (4, 5) par ses faces opposées l'une à l'autre, et dans lequel les deux varistances (4, 5) et l'électrode centrale (6) sont montées en sandwich entre les deux moitiés de boîtier (7, 8),
**caractérisé en ce**
**qu'**au moins un commutateur de court-circuit dépendant de la température est disposé à l'intérieur du boîtier de manière à ce que, lorsqu'une température limite prédéterminée T₁ est atteinte, au moins une varistance (4, 5) soit court-circuitée en raison d'un échauffement excessif d'au moins une varistance (4, 5),
en ce que les deux moitiés de boîtier (7, 8) sont respectivement électriquement reliées à une deuxième zone de connexion (15) d'une varistance (4, 5),
en ce que le commutateur de court-circuit comporte un étrier de court-circuit (19), un élément de retenue (20) isolé, mécaniquement relié à l'étrier de court-circuit (19), au moins un élément à ressort (21) et un métal de retenue (22),
dans lequel, à l'état normal des varistances (4, 5), l'étrier de court-circuit (19) est disposé de manière espacée de l'électrode centrale (6) par la force de ressort de l'élément à ressort (21) agissant contre l'élément de retenue (20) de manière à ce que l'élément de retenue (20) appuie, par l'intermédiaire d'un élément d'espacement (24) faisant saillie à travers une ouverture (23) ménagée dans l'électrode centrale (6), sur le métal de retenue (22) relié à l'électrode centrale (6) par l'intermédiaire d'une liaison par soudure, et
dans lequel, lors de la rupture de la liaison par soudure du fait d'un échauffement des varistances (4, 5), l'élément de retenue (20) est amené à une deuxième position avec l'étrier de court-circuit (19) sous l'effet de la force de ressort de l'élément à ressort (21), position à laquelle l'étrier de court-circuit (19) et l'électrode centrale (6) ainsi que le boîtier sont mis en contact de manière à ce que les varistances (4, 5) soient court-circuitées par l'intermédiaire de l'étrier de court-circuit (19).

2. Elément de protection contre les surtensions selon la revendication 1, **caractérisé en ce que** l'étrier de court-circuit (19) présente un dos en U (25) et deux branches de U (26), dans lequel les extrémités des branches de U (26) sont en butée sur des parties de contact correspondantes (27) de moitiés de boîtier (7) en cas de court-circuit.

3. Elément de protection contre les surtensions selon la revendication 2, **caractérisé en ce que** la moitié de boîtier (7) comporte deux nervures de contact (28) qui sont respectivement disposées de manière adjacente aux parties de contact (27), et **en ce que** les extrémités des branches de U (26) de l'étrier de court-circuit (19) présentent respectivement une partie d'extrémité rabattue (29), dans lequel en cas de court-circuit les parties d'extrémité (29) des branches de U (26) sont en butée sur une nervure de contact (28) et une zone opposée des branches de U (26) sont en butée sur la partie de contact opposée (27) respectivement.

4. Elément de protection contre les surtensions comportant un boîtier, des bornes (2, 3) pour le raccordement électrique de l'élément de protection contre les surtensions (1) au trajet de courant ou de signal à protéger, deux varistances (4, 5) électriquement connectées en parallèle, disposées à l'intérieur du boîtier, et une électrode centrale (6) au moins partiellement disposée entre les varistances (4, 5), dans lequel le boîtier comporte deux moitiés de boîtier (7, 8) reliées électriquement l'une à l'autre, constituées de métal, dans lequel l'électrode centrale (6) est isolée par rapport aux moitiés de boîtier (7, 8) et est respectivement reliée électriquement à une première zone de connexion (9) d'une varistance (4, 5) par ses faces opposées l'une à l'autre, et dans lequel les deux varistances (4, 5) et l'électrode centrale (6) sont montées en sandwich entre les deux moitiés de boîtier (7, 8),
**caractérisé en ce**
**qu'**au moins un commutateur de court-circuit dépendant de la température est disposé à l'intérieur du boîtier de manière à ce que, lorsqu'une température limite prédéterminée T₁ est atteinte, au moins une varistance (4, 5) soit court-circuitée en raison d'un échauffement excessif d'au moins une varistance (4, 5),
en ce que l'électrode centrale (6) est reliée à une première borne (2) pour le raccordement d'au moins un conducteur actif (L) du trajet de courant ou de signal à protéger, en ce qu'un métal de connexion (32) est respectivement disposé entre les deux moitiés de boîtier (7, 8) et les deuxièmes zones de connexion (15) des deux résistances (4, 5), dans lequel les métaux de connexion (32) sont isolés par un élément d'isolation (33) des moitiés de boîtier (7, 8),
en ce qu'un commutateur de court-circuit est respectivement associé aux deux varistances (4, 5), dans lequel les commutateurs de court-circuit présentent respectivement une partie de conducteur souple (34), une tige d'actionnement (35) et un élément à ressort (36),
en ce que la première extrémité (37) d'une partie de conducteur souple (34) est respectivement électriquement reliée à une partie de contact (38) d'un métal de connexion (32) et en ce que la deuxième extrémité (39) d'une partie de conducteur souple (34) est respectivement reliée à une extrémité (40) de la tige d'actionnement (35) correspondante,
dans lequel, à l'état normal des varistances (4, 5), la deuxième extrémité (39) d'une partie de conducteur souple (34) est disposée de manière espacée d'une partie de contact (41) de l'électrode centrale (6) contre la force de ressort de l'élément à ressort (36) agissant sur la tige d'actionnement (35) de manière à ce que la tige d'actionnement (35) soit maintenue à sa première position par un élément thermosensible (42), et
dans lequel, lors de l'amollissement de l'élément thermosensible (42) du fait d'un échauffement des varistances (4, 5), la deuxième extrémité (39) d'une partie de conducteur souple (34) est amenée à une deuxième position par la force de ressort de l'élément à ressort (36) agissant sur la tige d'actionnement (35), position à laquelle la deuxième extrémité (39) d'une partie de conducteur souple (34) vient au contact de la partie de contact (41) de l'électrode centrale (6), de manière à ce que les varistances respectives (4, 5) soient court-circuitées par l'intermédiaire d'une partie de conducteur souple (34).

5. Elément de protection contre les surtensions selon la revendication 4, **caractérisé en ce que** les tiges d'actionnement (35) sont respectivement guidées dans un orifice (42) ménagé dans la partie de contact (38) associée du métal de connexion (32), **en ce que** les éléments à ressort (36) sont respectivement disposés entre l'extrémité (40) de la tige d'actionnement (35) et la partie de contact (38) du métal de connexion (32) et **en ce que**, dans les tiges d'actionnement (35), une tige thermosensible (42) est respectivement disposée dans un évidement, dans lequel la tige (42), à l'état normal des varistances (4, 5), se trouve sur la face de la partie de contact (38) du métal de connexion (32) qui est opposée à l'élément à ressort (36) et **en ce que** la tige (42), lors d'un échauffement, perd sa rigidité, de telle sorte que la tige d'actionnement (35) n'est plus maintenue à sa première position par la tige (42) contre la force de ressort de l'élément à ressort (36).

6. Elément de protection contre les surtensions selon la revendication 4 ou 5, **caractérisé en ce qu'**un fusible de puissance (43), notamment un coupe-circuit à fusible, est respectivement associé aux deux varistances (4, 5) et **en ce que** les métaux de connexion (32) comportent respectivement une deuxième partie de contact (44) qui est reliée de manière électriquement conductrice à une première borne (45) d'un fusible de puissance (43).

7. Elément de protection contre les surtensions selon l'une quelconque des revendications 1 à 6, **caractérisé en ce qu'**au moins un coupe-circuit comportant un conducteur fusible est disposé à l'intérieur du boîtier et est relié de manière électriquement conductrice aux varistances (4, 5) de manière à ce que le coupe-circuit se déclenche à la fois lorsqu'une température limite prédéterminée est atteinte en raison d'un échauffement excessif d'au moins une varistance (4, 5) et lorsqu'un court-circuit se produit en séparant ainsi électriquement les varistances (4, 5) du circuit de courant, dans lequel le circuit comporte de préférence un conducteur fusible constitué d'un matériau fondant à basse température, par exemple de l'étain et de préférence, un agent d'extinction, par exemple du sable.

8. Elément de protection contre les surtensions selon l'une quelconque des revendications 1 à 7, **caractérisé en ce que** le boîtier comporte une borne de conducteur de protection (55) en tant que deuxième borne (3), par l'intermédiaire de laquelle un conducteur de protection peut être électriquement relié au boîtier, dans lequel la borne de conducteur de protection (55) est de préférence disposée sur la première moitié de boîtier (7) et comporte une rainure de réception (56).

9. Elément de protection contre les surtensions selon l'une quelconque des revendications 1 à 8, **caractérisé en ce qu'**un boîtier interne entourant au moins les varistances (4, 5) et le cas échéant, le ou les commutateur(s) de court-circuit dépendant(s) de la température, est formé à l'intérieur du boîtier, dans lequel le boîtier interne est réalisé en deux parties et est constitué d'une première partie de boîtier (60) reliée à la première moitié de boîtier (7) et d'une deuxième partie de boîtier (61) reliée à la deuxième moitié de boîtier (8), dans lequel le boîtier interne comporte également de préférence au moins un élément d'étanchéité (62, 63).

10. Elément de protection contre les surtensions selon l'une quelconque des revendications 1 à 9, **caractérisé en ce qu'**un dispositif d'affichage optique et/ou un dispositif d'affichage à distance est réalisé ou est disposé sur le boîtier pour afficher l'état des varistances (4, 5).
